# EUROPEAN PATENT APPLICATION

(11) **EP 1 031 783 A1**
(43) Date of publication of application: **30.08.2000**
(21) Application number: 00301442.0
(22) Date of filing: 24.02.2000
(51) Int. Cl.: F16M 13/02

(54) **A mounting bracket**

(30) Priority: 24.02.1999 GB 9904201
(71) Applicant: BRIDISCO LIMITED, London N17 7RQ (GB)
(72) Inventor: Gough, Keith Adrian, Prescot, Merseyside L34 0JE (GB)
(74) Representative: Ajello, Michael John

(57) **Abstract**

A mounting bracket for attachment of a lamp to a wall surface and comprising a pair of parallel arms (10) having aligned apertures (11) by which the lamp is attached to bracket, and three flats 12, 13 and 14 each with a pair of apertures (15) such that the bracket may be attached to a wall surface by screws or bolts passed through the apertures (15) of any one of the flats. The bracket may be mounted with the apertures aligned horizontally or vertically.

## Description

THIS INVENTION concerns a bracket of the kind for the attachment of, for example, a lamp to a wall surface. Typically, a simple conventional bracket of this kind comprises a first part comprising a back plate having one or more apertures by which the bracket may be screwed or bolted to a wall surface, and a pair of spaced parallel arms extending forwardly from the back plate to receive between them the lamp or other object to be mounted.

Such a bracket does not permit the lamp to face in a direction other than at right angles to the wall, except perhaps for upwards and downwards pivotal movement unless it is attached to the bracket about a vertical pivot.

An object of the present invention is to provide a mounting bracket which may be selectively attached to a wall surface in more than one angular position within a horizontal plane.

According to the present invention, there is provided a mounting bracket comprising a first part for attachment of an object to be mounted on a surface, and a second part for attachment of the bracket to the surface, characterised in that the second part comprises at least two angularly displaced flats each with means for attaching same selectively to the surface.

Preferably, the first part comprises a pair of spaced parallel arms adapted to project forwardly from the mounting surface and having a pair of aligned apertures for attachment of the object to the bracket, the second part comprising three angularly displaced flats each with at least one aperture for receiving a screw or bolt for attachment of the bracket to the surface.

The mounting bracket may be of a metal alloy. Alternatively the bracket may be moulded from plastics.

An embodiment of the invention will now be described, by way of example only, with reference to the accompanying drawings in which:-
Fig. 1 is a perspective view of a mounting bracket made in accordance with the invention and taken from above the bracket and to one side thereof.
and Fig. 2 is a similar view from above a modified bracket and from an opposite side thereof.

Referring now to the drawing, a mounting bracket made in accordance with the invention comprises a first part comprising a pair of spaced parallel arms 10 having aligned receiving apertures 11 adjacent their free end to receive the side mounting bolts of a lamp housing such that the lamp may pivot about the horizontal axis defined by the apertures 11.

The bracket also comprises a second part comprising three flats 12, 13 and 14 which are angularly displaced with respect to one another and to the arms 10. Each of the flats 12, 13, 14 is provided with a pair of apertures 15 to receive screws or bolts for attachment to the bracket to a wall surface. It can therefore be seen that the bracket may be mounted upon the wall surface selectively by means of one of the flats 12, 13 and 14 acting as a back plate thus to determine the angle at which the arms 11 extend outwardly from the wall surface.

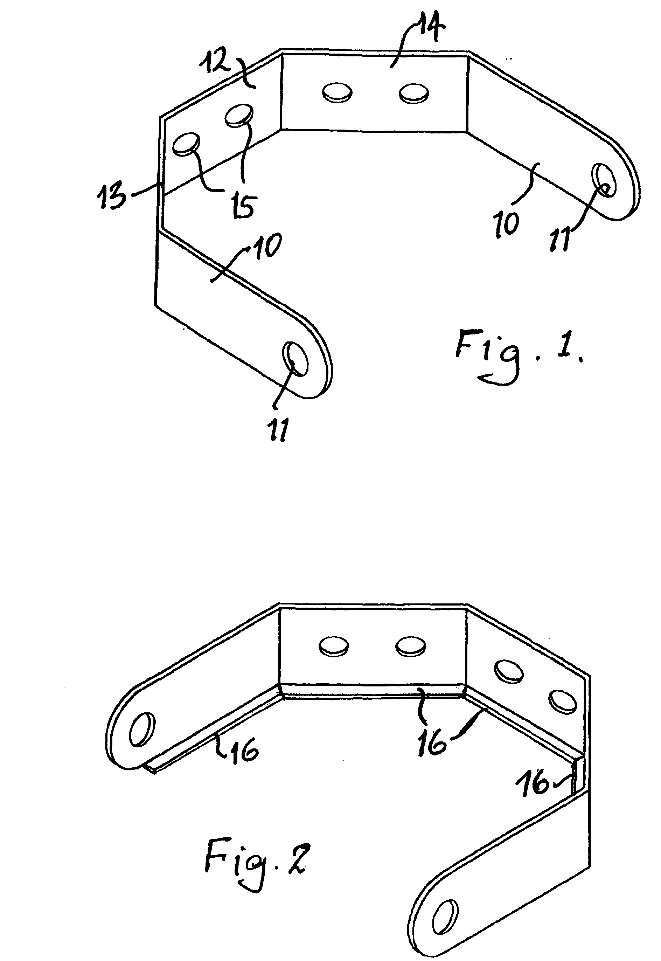

The bracket may be produced from pressed metal alloy and as can be seen in Fig. 2 may if required include a stiffening sill or rib 16 turned inwardly from one or more of the parts 10, 12, 13 and 14.

Alternatively, the bracket may be moulded from plastics.

It will therefore be seen that the mounting bracket made in accordance with the invention provides a simple expedient for selecting the horizontal mounting angle of a lamp or other object which avoids the need for a more complex and expensive swivel arrangement above or beneath the object.

It is not intended to limit the invention to the above example only. For example more or less than three flats may comprise the second part of the bracket. In the case of two flats one of which is normal to the arms 10, the bracket may be turned upside down to provide the full range of selectable positions. Whilst for most applications at least one of the flats 12 should be normal to the arms 10, in some cases the lamp or other object to the mounted may be required always to be placed other than at right-angles to the wall surface.

It will be appreciated also that the bracket may be used such that the arms 10 are disposed in superimposed relationship one above the other whereby the selection provided by the flats 12, 13 and 14 permits the lamp to be angled upwardly or downwardly, and pivotable horizontally about the aligned apertures 11.

## Claims

1. A mounting bracket comprising a first part (10, 11) for attachment of an object to be mounted on a surface, and a second part for attachment of the bracket to the surface; characterised in that the second part comprises at least two angularly displaced flats (12, 13, 14) each with means for attaching same selectively to the surface.

2. A mounting bracket according to Claim 1, wherein the first part comprises a pair of spaced parallel arms (10) adapted to project forwardly from the mounting surface and having a pair of aligned apertures (11) for attachment of the object to the bracket, the second part comprising three angularly spaced flats (12, 13, 14) each with at least one aperture (15) for receiving a screw or bolt for attachment of the bracket to the surface.

3. A mounting bracket according to Claim 1 or Claim 2, produced from a pressed metal alloy.

4. A mounting bracket according to Claim 1 or Claim 2, produced by moulding from plastics.

5. A mounting bracket according to Claim 2, wherein each of said angularly displaced flats (12, 13, 14) includes a pair of spaced apertures (15) for receiving attachment screws or bolts.

6. A mounting bracket according to Claim 2, wherein the three flats (12,1 3, 14) are angularly displaced with respect to one another and to the arms (10).

7. A mounting bracket according to any preceding claim, including a stiffening sill or rib (16) projecting inwardly from at least one of said parts.
